# DEMANDE DE BREVET EUROPEEN

(11) **EP 1 491 780 A2**
(43) Date de publication de la demande: **29.12.2004**
(21) Numéro de dépôt: 04291570.2
(22) Date de dépôt: 22.06.2004
(51) Int. Cl.: F16C 1/22

(54) **Tendeur de câble pour lève-vitre**

(30) Priorité: 27.06.2003 FR 0307820
(71) Demandeur: ArvinMeritor Light Vehicle Systems-France, 45600 Sully sur Loire (FR)
(72) Inventeur: Mazouzi, Mustapha, 94350 Villiers sur Marne (FR); Pradet, Marc, 45240 La Ferte St.Aubin (FR)
(74) Mandataire: Cabinet Hirsch

(57) **Abrégé**

L'invention se rapporte à un tendeur de câble comprenant
- deux organes (12,14) définissant un passage de câble, les organes étant mobiles l'un par rapport à l'autre selon un mouvement hélicoïdal,
- un cran (16), autorisant le mouvement relatif des organes dans un sens et bloquant le mouvement relatif des organes dans un autre sens.

Le mouvement du tendeur est ainsi irréversible, quelques soient les conditions de fonctionnement.

## Description

La présente invention concerne un tendeur de câble et un lève-vitre comportant un tel tendeur.

Le document EP-A-244 303 décrit un dispositif vis-écrou soumis à un effort axial alterne dans les deux sens, le filet de la vis présentant des angles d'hélice et de pression déterminés, qui sont choisis de manière que dans un premier sens dit réversible, la vis puisse, sous la poussée axiale exercée dans ce sens par un ressort effectuer une translation et une rotation dans l'écrou, et que dans un second sens dit irréversible, opposé au premier, la vis subissant une poussée axiale dans ce second sens par le poussoir ne puisse effectuer ni translation, ni rotation dans l'écrou. Cet ensemble peut être appliqué au rattrapage de jeu automatique de systèmes soumis à des efforts longitudinaux alternés tels que des arbres de moteurs électriques ou les commandes par câble.

L'inconvénient de ce système est que sous certaines conditions, telles qu'en présence d'humidité ou de graisse, le dispositif n'est plus irréversible. Lorsque la vis subit la poussée axiale dans le second sens par le poussoir, la vis effectue une translation et une rotation indésirables dans l'écrou. L'ensemble appliqué au rattrapage de jeu devient inefficace.

Il y a donc un besoin pour un dispositif de rattrapage de jeu efficace sous toute condition.

Pour cela, l'invention propose un tendeur de câble comprenant
- deux organes définissant un passage de câble, les organes étant mobiles l'un par rapport à l'autre selon un mouvement hélicoïdal,
- un cran, autorisant le mouvement relatif des organes dans un sens et bloquant le mouvement relatif des organes dans un autre sens.

Selon une variante, le cran est escamotable.

Selon une variante, le cran est escamotable dans un sens de rotation et est bloquant dans l'autre sens de rotation.

Selon une variante, le tendeur comprend en outre un ressort de sollicitation d'un organe par rapport à l'autre organe.

Selon une variante, les organes sont un conduit et un tube, le tube étant mobile en translation le long du conduit.

Selon une variante, le cran est escamotable dans le tube.

Selon une variante, le conduit comprend une rainure le long du passage de câble, le cran pénétrant dans une rainure.

Selon une variante, le cran a une face inclinée s'étendant tangentiellement au tube.

Selon une variante, le cran a une butée s'étendant radialement au tube.

Selon une variante, l'un des organes comprend deux crans, l'autre organe comprenant des rainures dans lesquelles pénètrent les crans.

Selon une variante, les crans ont un écart angulaire non proportionnel à l'écart angulaire des rainures.

Selon une variante, les crans ont un écart angulaire proportionnel à l'écart angulaire des rainures.

Selon une variante, le cran est porté par le conduit.

L'invention se rapporte aussi à un lève-vitre comportant un tendeur selon l'une des variantes précédentes.

D'autres caractéristiques et avantages de l'invention apparaîtront à la lecture de la description détaillée qui suit des modes de réalisation de l'invention, donnés à titre d'exemple uniquement et en références aux dessins qui montrent :
- figure 1, une vue en coupe d'un tendeur de câble;
- les figure 2 à 5, des vues d'éléments du tendeur.

L'invention se rapporte à un tendeur de câble comprenant deux organes définissant un passage de câble, les organes étant mobiles l'un par rapport à l'autre selon un mouvement hélicoïdal. Le tendeur comprend aussi un cran autorisant le mouvement relatif des organes dans un sens mais bloquant le mouvement relatif dans un autre sens. Le tendeur est ainsi irréversible, quelques soient les conditions de fonctionnement.

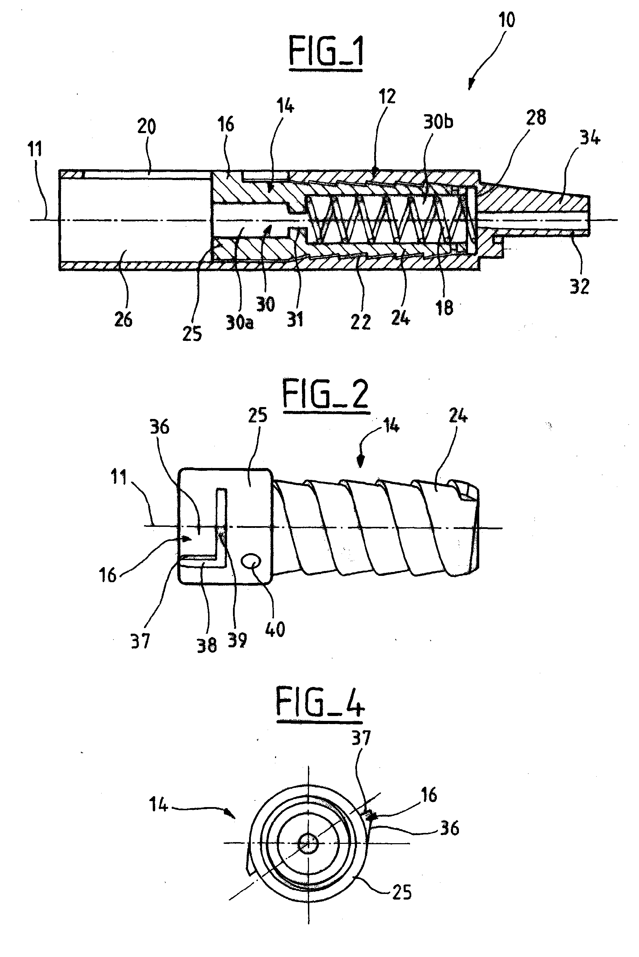

La figure 1 montre un tendeur de câble 10. Le tendeur comprend des éléments tels qu'un premier organe 12 et un deuxième organe 14. Les organes 12 et 14 définissent un passage de câble le long de l'axe 11. Les deux organes 12 et 14 sont mobiles l'un par rapport à l'autre le long de l'axe 11 selon un mouvement relatif hélicoïdal. Le mouvement relatif permet d'augmenter la longueur du passage de câble, provoquant ainsi la tension du câble. L'augmentation de la longueur du passage de câble sur la figure 1 se fait par un mouvement du deuxième organe 14 vers la gauche.

Le tendeur est par exemple applicable dans un lève-vitre à câble. Le câble du lève-vitre s'étend dans une gaine de protection (non représentée), une extrémité de la gaine venant en butée contre l'organe 14 depuis la gauche sur la figure 1. Le mouvement du deuxième organe 14 vers la gauche sollicite l'extrémité de la gaine ; le chemin de câble est ainsi augmenté, permettant la conservation de la tension du câble.

La figure 1 montre un mode de réalisation selon lequel les premier et deuxième organes sont respectivement un conduit 12 et un tube 14.

Le premier organe 12, sous forme de conduit, est alésé sur une partie de sa longueur. L'alésage 26 s'étend à partir de l'une des extrémités du conduit 12 jusqu'à un fond 28. L'alésage 26 comporte un taraudage au moins sur une partie de sa longueur. Le tendeur 10 comprend aussi sur l'autre extrémité du conduit 12 une tubulure 32 de diamètre inférieur à celui du conduit 12 et qui s'étend le long de l'axe 11. La tubulure 32 permet un meilleur centrage du tendeur 10 autour du câble le long de l'axe 11, lorsque le tendeur 10 est assemblé sur un lève-vitre. Par ailleurs, le tendeur comprend aussi une nervure 34 le long de l'axe 11 sur la tubulure 32. La nervure empêche le tendeur 10 de tourner autour de l'axe 11 lorsqu'il est assemblé sur le lève-vitre, par exemple sur la platine moteur.

Le deuxième organe 14, sous forme de tube, comporte un trou 30 débouchant de part et d'autre du tube 14. Le trou 30 est divisé en deux parties 30a et 30b par un épaulement 31 annulaire permettant le passage du câble le long de l'axe 11. La partie 30a permet la réception de la gaine de protection qui vient en appui contre une face de l'épaulement 31. La partie 30a du trou 30 permet ainsi une immobilisation de la gaine transversalement à l'axe 11. La partie 30b du trou est un manchon permettant la réception d'un ressort 18 qui sera décrit par la suite.

Le tube 14 pénètre dans l'alésage 26 du conduit 12 et est mobile le long de l'axe 11. Le mouvement hélicoïdal peut être obtenu à l'aide d'un taraudage 22, dans le conduit 12, coopérant avec le filetage 24 autour du tube 14. Le tube 14 est enfilé par l'ouverture de l'alésage 26 puis est vissé dans l'alésage 26. Une face du tube 14 peut venir en butée contre le fond 28 de l'alésage 26. Cette position en butée correspond à la position dans laquelle le câble est le moins tendu par le tendeur 10 (position début de vie). Lorsque ladite face du tub 14 s'éloigne du fond 28, la longueur du tendeur augmente le long du chemin de câble ce qui augmente la tension dans le câble.

Le mouvement relatif hélicoïdal permet un réglage précis et continu de la position relative des deux organes. Ceci permet d'éviter d'appliquer une surtension dans le câble. Le mouvement relatif hélicoïdal des organes est composé d'un mouvement relatif de rotation et d'un mouvement relatif de translation.

La figure 1 montre par ailleurs, un cran 16. Le cran 16 autorise le mouvement relatif des organes 12 et 14 dans un sens et bloque le mouvement relatif des organes dans un autre sens. Le cran 16 a pour effet de rendre irréversible le mouvement de l'un des organes par rapport à l'autre, indépendamment des conditions de fonctionnement. Lorsque le deuxième organe 14 se déplace vers la gauche sur la figure 1, provoquant l'augmentation du chemin de câble et de la tension du câble, le cran 16 autorise un tel mouvement. En revanche, le cran 16 bloque le mouvement du deuxième organe 14 vers la droite, évitant la diminution du chemin de câble et de la tension du câble. Le cran 16 empêche par exemple la gaine de protection du câble de provoquer le mouvement vers la droite sur la figure 1 du deuxième organe 14. Le cran 16 n'autorise la rotation du deuxième organe 14 que dans un seul sens, ne permettant ainsi la translation du deuxième organe que dans un seul sens le long du passage 11 de câble.

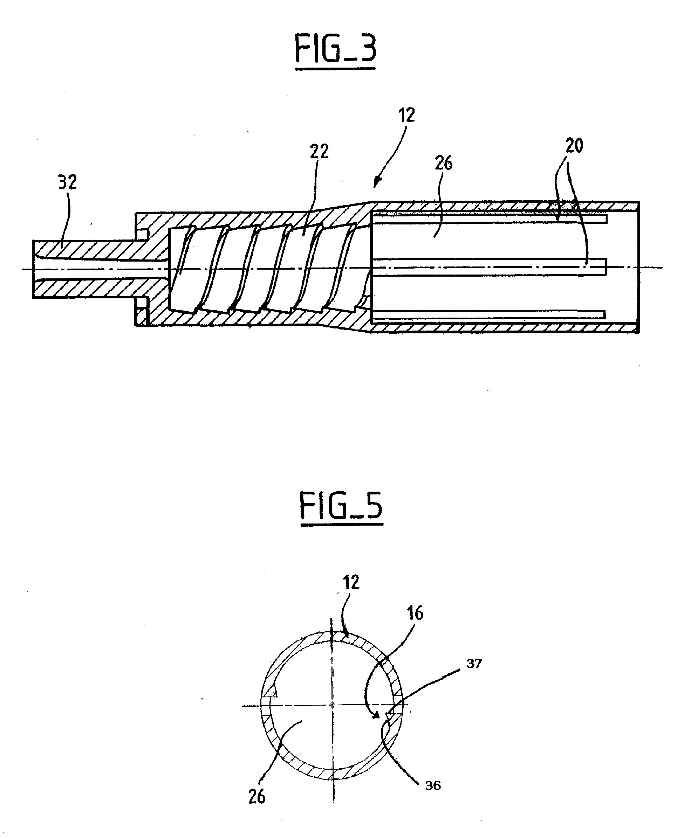

Selon un mode de réalisation, représenté sur la figure 1, le cran 16 est porté par le deuxième organe 14. Le cran 16 pénètre dans une rainure 20 du premier organe 12. La figure 3 montre une partie du tendeur 10, en l'occurrence le premier organe 12. L'organe 12 comporte la tubulure 32, une première section comportant le taraudage 22 puis une deuxième section comportant une pluralité de rainures 20. Les rainures 20 s'étendent le long de l'axe 11. La figure 4 montre une vue de côté du deuxième organe 14. Le deuxième organe 14 porte le cran 16. L'organe 14 peut porter plusieurs crans 16, deux étant représentés sur la figure 4. Selon la figure 1, le deuxième organe 14 comporte une section avec le filetage 24 et une tête 25. Le cran 16 est supporté par la tête 25. La tête 25 coopère avec la surface de l'alésage 26 de l'organe 12. Les surfaces en contact de la tête 25 et de l'alésage 26 sont de préférence non filetée ni taraudée, le contact entre les surfaces étant glissant pour faciliter la fabrication de ces surfaces et pour faciliter la coopération du cran 16 et d'une rainure 20.

Selon la figure 4, le cran 16 s'étend en saillie du flanc de l'organe 14, et en particulier de la tête 25. Le cran 16 comporte une face inclinée 36 et une butée 37 ; la face inclinée 36 s'étend tangentiellement à la circonférence de la tête 25 et la butée 37 s'étend selon un rayon de la tête 25.

Selon la figure 1, le cran 16 pénètre dans une rainure 20. Selon un sens de rotation du deuxième organe 14 par rapport au premier organe 12, la face inclinée 36 coopère avec un flanc de la rainure ; le cran 16 autorise alors le mouvement relatif des organes 12, 14. Par exemple, sur la figure 1, à partir d'une position du cran 16 dans une rainure 20, lorsque le deuxième organe 14 tourne dans le sens de rotation des aiguilles d'une montre sur la figure 4, la surface inclinée 36 du cran 16 glisse contre un flanc de la rainure 20. La surface inclinée 36 facilite l'extraction du cran 16 hors de la rainure 20. En revanche, toujours à partir de la position de la figure 1 dans laquelle le cran 16 est dans la rainure et lorsque le deuxième organe 16 tourne dans le sens contraire à celui de rotation des aiguilles d'une montre sur la figure 4, la butée 37 du cran 16 vient en contact d'un flanc de la rainure 20. La butée 37 empêche alors l'extraction du cran hors de la rainure 20.

Ainsi, le cran autorise la rotation du deuxième organe 14 par rapport au premier organe 12 dans un sens de rotation, mais bloque la rotation dans l'autre sens. Le cran empêche ainsi la rotation du mouvement hélicoïdal, bloquant ainsi la translation du mouvement hélicoïdal. Le cran 16 est un obstacle à la rotation du deuxième organe 14 dans un sens de rotation. Ainsi, le cran 16 rend irréversible le tendeur de câble.

La taille du cran 16 est choisie de sorte à s'extraire facilement de la rainure 20 dans un sens de rotation mais aussi de sorte à immobiliser le cran 16 dans la rainure 20, quelque soit les conditions de fonctionnement.

Grâce à la surface inclinée 36, l'enclenchement du cran 16 dans une rainure 20 est effectué progressivement ; l'enclenchement se fait alors sans bruit. Le tendeur 10 permet donc de réduire le bruit lors de son fonctionnement. La rigidité du cran peut être choisie pour éviter le claquement. Egalement, la forme du cran peut être telle qu'il n'y a pas de contact avec entre la surface inclinée 36 et l'alésage 26.

Le cran 16 peut être escamotable. Le cran 16 est susceptible de s'effacer autorisant ainsi le mouvement relatif des organes dans un sens, en l'occurrence celui permettant l'augmentation de la tension appliquée au câble. L'escamotage du cran 16 permet de réduire l'effort applicable aux organes 12, 14 pour provoquer leur déplacement relatif. En particulier, le cran 16 est escamotable dans un sens de rotation autorisant le mouvement relatif des organes dans un sens. Sur la figure 1, lorsque le deuxième organe 14 subit un mouvement de rotation provoquant une translation de l'organe vers la gauche, le cran 16 s'escamote.

La figure 4 montre le deuxième organe 14 avec le cran 16 qui peut être escamotable. Le cran 16 est réalisé sous forme de languette articulée. Le cran 16 peut être réalisé à l'extrémité libre de la tête 25 pour faciliter la fabrication. Deux fentes 38, 39 sont réalisées, l'une 39 radialement, l'autre 38 selon l'axe 11. Le cran 16 est alors articulé à la tête 25 formant ainsi une languette articulée. La fente 38 réalisée selon l'axe 11 est au pied de la butée 37. Ainsi, lorsque le deuxième organe 14 tourne de sorte à faire coulisser la surface inclinée 36 sur un flanc de la rainure 20, le cran 16 est pivoté et escamoté dans la tête 25.

La figure 5 montre un autre mode de réalisation du cran 16. La figure 5 est une section du premier organe 12. Le cran 16 est porté par le premier organe 12. La surface de l'alésage comporte le cran 16. La surface de l'alésage 26 est la face inclinée 36 et la butée 37 est réalisée radialement. Le cran 16 a la forme d'une marche dans la surface de l'alésage 26. Le cran 16 coopère avec une languette articulée du deuxième organe 14. La tête 25 du deuxième organe 14 peut comporter la fente 38 qui s'étend le long de l'axe 11 ; la fente 38 s'étend alors sur toute la hauteur de la tête 25, le long de l'axe 11. Sur la figure 5, lorsque le deuxième organe 14 tourne dans le premier organe dans le sens contraire au sens de rotation des aiguilles d'une montre dans le premier organe 12, le cran 16 ne s'oppose pas à la rotation du deuxième organe 14. En revanche, lorsque le deuxième organe est entraîné en rotation dans l'autre sens, le cran 16 sollicite la languette qui est enfoncée dans la tête 25 ; le cran 16 glisse le long de la languette depuis l'articulation de la languette jusqu'à la fente 38. La butée 37 du cran vient alors en butée contre l'épaisseur du deuxième organe 14 et empêche la rotation du deuxième organe 14 par rapport au premier 12.

Sur la figure 5, le premier organe est représenté en section, mais le cran 16 s'étend sur au moins une partie de la longueur de la surface de l'alésage 26 le long de l'axe 11. Le cran 16 peut s'étendre sur toute la longueur de l'alésage. De même, la rainure 20 s'étend sur au moins une partie de la longueur de l'alésage 26. Sur les figures 1 et 3, la rainure 20 s'étend depuis l'extrémité de l'alésage 26 côté taraudage 22 jusqu'à proximité de l'extrémité libre de l'alésage. De préférence, la rainure 20 ne s'étend pas jusqu'à l'extrémité libre de sorte à ne pas fragiliser le premier organe 12.

Le tendeur peut comporter un ou plusieurs crans 16 et une ou plusieurs rainures 20. Le nombre de crans 16 sur le deuxième organe 14 et le nombre de rainures 20 sur le premier organe 12 sont choisis en fonction de la précision de la tension à appliquer au câble. Combiné avec le mouvement hélicoïdal, plus le nombre de crans et de rainures augmente, plus la précision de la tension dans le câble augmente. Par ailleurs, la présence de plusieurs crans 16 améliore le caractère irréversible du tendeur 10. La figure 4 montre la présence de deux crans 16. La figure 3 montre la présence d'au moins trois rainures. Le même écart angulaire peut séparer les rainures 20 entre elles et les crans 16 entre eux. Les crans 16 s'enclenchent alors en même temps chacun dans une rainure, chacun des crans 16 contribuant à l'irréversibilité du tendeur. Alternativement, l'écart angulaire entre les rainures 20 peut être différent de celui présent entre les crans 16. Ceci permet d'augmenter la précision du rattrapage de jeux dans la tension du câble sans pour autant augmenter considérablement le nombre de crans et de rainures. Il en va de même pour le nombre de crans 16 dans l'alésage 26 et le nombre de languettes articulées sur la tête 25 peuvent être faits.

Les deux organes 12 et 14 sont mobiles l'un par rapport à l'autre à l'aide d'un moyen élastique. Il s'agit par exemple d'un ressort 18 de sollicitation d'un organe par rapport à l'autre organe. Le ressort 18 s'étend le long de l'axe 11 ; il permet le mouvement le long de l'axe 11, et donc le long du passage de câble, d'un organe par rapport à l'autre. Sur la figure 1, le ressort 18 est en appui d'une part contre l'épaulement 31 du deuxième organe et d'autre part contre le fond 28 de l'alésage 26. Le ressort 18 est guidé le long de l'axe 11 par la partie 30b formant manchon. Le ressort 18 s'étend partiellement dans la partie 30b ce qui permet de limiter l'encombrement axial du tendeur 10. La raideur du ressort 18 est telle que la force exercée le long de l'axe 11 par le ressort 18 sur l'épaulement 31 provoque le mouvement du deuxième organe 14 par rapport au premier organe 12. Le ressort 18 provoque le mouvement relatif hélicoïdal des deux organes 12, 14. Le deuxième organe 18 tourne autour de l'axe 11 et se translate vers la gauche de la figure 1. Dans l'exemple d'une pluralité de crans 16 et de rainures 20, les crans 16 sont extraits d'une rainures et s'enclenchent dans une rainure angulairement adjacente. Les crans 16 enclenchés empêchent le mouvement inverse du deuxième organe grâce à la butée 37. Les crans 16 empêchent le deuxième organe 14 d'être déplacé par la gaine de protection du câble exerçant une force le long de l'axe 11 à l'encontre de la force du ressort. Les crans 16 empêchent ainsi la diminution du chemin de câble et de la tension du câble. Il en va de même pour les crans 16 dans l'alésage 26 et les languettes articulées sur la tête 25.

Le cran 16 permet aussi de contrer une force excessive de la gaine de protection le long de l'axe 11 qui tendrait à plaquer le deuxième organe 14 contre le fond 28 de l'alésage 26 et diminuer la tension appliquée au câble. Un tel plaquage s'accompagnant d'un bruit de claquement, le tendeur 10 et le cran 16 permettent d'éviter un tel bruit.

La figure 2 montre un perçage 40 dans le deuxième organe 14. Le perçage 40 est par exemple radial et permet l'insertion d'une goupille d'immobilisation relative des organes 12, 14. La goupille permet par exemple de maintenir comprimé le ressort 18 entre le fond 28 et l'épaulement 31 lors du transport du tendeur et de l'assemblage du tendeur dans le lève-vitre. La goupille est par exemple insérée à travers une rainure 20 et dans le perçage 40. Une fois le tendeur en place dans le lève-vitre et la gaine de protection insérée dans la partie 30a, la goupille peut être retirée. Le ressort 18 se détend déplaçant le deuxième organe 14 et appliquant une tension dans le câble.

L'invention se rapporte aussi à un lève-vitre comportant un tel tendeur 10. Le lève-vitre comprend un câble passant dans une gaine de protection et parcourant un chemin de câble. La gaine est en appui à une de ses extrémité contre le deuxième organe 12 et peut être à son extrémité en butée contre un autre tendeur. Le long du chemin de câble est disposé également un support à travers lequel est passé la tubulure 32. Le support est par exemple un rail de guidage de curseur ou un boîtier de tambour d'enroulement du câble. Le premier organe 12 est en appui contre le support et le deuxième organe 14 est déplacé par rapport au premier organe 12. Le mouvement du deuxième organe arc-boute la gaine provoquant la tension du câble, le ou les crans 16 rendant irréversible le tendeur. Au cours du fonctionnement du lève-vitre, un jeu peut s'instaurer ; le tendeur permet de rattraper ce jeu.

## Revendications

1. Un tendeur de câble comprenant
- deux organes (12, 14) définissant un passage de câble, les organes étant mobiles l'un par rapport à l'autre selon un mouvement hélicoïdal,
- un cran (16) escamotable, autorisant le mouvement relatif des organes dans un sens et bloquant le mouvement relatif des organes dans un autre sens.

2. Le tendeur selon la revendication 1, **caractérisé en ce que** le cran (16) est escamotable dans un sens de rotation et est bloquant dans l'autre sens de rotation.

3. Le tendeur selon l'une des revendications précédentes, **caractérisé en ce qu'**il comprend en outre un ressort (18) de sollicitation d'un organe (14) par rapport à l'autre organe (12).

4. Le tendeur selon l'une des revendications précédentes, **caractérisé en ce que** les organes (12, 14) sont un conduit (12) et un tube (14), le tube (14) étant mobile en translation le long du conduit (12).

5. Le tendeur selon la revendication précédente, **caractérisé en ce que** le cran est escamotable dans le tube (14).

6. Le tendeur selon la revendication précédente, **caractérisé en ce que** le conduit (12) comprend une rainure (20) le long du passage de câble, le cran (16) pénétrant dans une rainure.

7. Le tendeur selon la revendication 5 ou 6, **caractérisé en ce que** le cran (16) a une face inclinée (36) s'étendant tangentiellement au tube (14).

8. Le tendeur selon la revendication 5 à 7, **caractérisé en ce que** le cran (16) a une butée (37) s'étendant radialement au tube (14).

9. Le tendeur selon l'une des revendications 5 à 8, **caractérisé en ce que** l'un des organes (14) comprend deux crans (16), l'autre organe (12) comprenant des rainures (20) dans lesquelles pénètrent les crans.

10. Le tendeur selon la revendication 9, **caractérisé en ce que** les crans ont un écart angulaire non proportionnel à l'écart angulaire des rainures.

11. Le tendeur selon la revendication 9, **caractérisé en ce que** les crans ont un écart angulaire proportionnel à l'écart angulaire des rainures.

12. Le tendeur selon la revendication 4, **caractérisé en ce que** le cran (16) est porté par le conduit (12).

13. Un lève-vitre comportant un tendeur selon l'une des revendications précédentes.
